# EUROPEAN PATENT APPLICATION

(11) **EP 1 933 259 A1**
(43) Date of publication of application: **18.06.2008**
(21) Application number: 06811404.0
(22) Date of filing: 06.10.2006
(51) Int. Cl.: G06K 17/00, H01R 12/18

(54) **MEMORY CARD SOCKET**

(30) Priority: 07.10.2005 JP 2005295416
(71) Applicant: MATSUSHITA ELECTRIC WORKS, LTD., Kadoma-shi, Osaka 571-8686 (JP)
(72) Inventor: TANAKA, Hirohisa, Osaka 571-8686 (JP); NAMBOKU, Masato, Osaka 571-8686 (JP); YAMANA, Masahito, Osaka 571-8686 (JP)
(74) Representative: Appelt, Christian W.
(86) International application number: PCT/JP2006/320077
(87) International publication number: WO 2007/043461

(57) **Abstract**

A memory card socket has a plate-like antenna block 17 having a coil-like secondary antenna 20B which is opposed to an antenna 20A incorporated in a memory card MC in a state where the memory card MC is attached to the card receiving portion 2a. Openings 9a and 10a as cavities are formed in portions of the antenna block 17 inside of the coil of the secondary antenna 20B. With this structure, it is possible to obtain a memory card socket having a compact and simple structure and having a non-contact communication function capable of preventing producing cost from increasing.

## Description

### TECHNICAL FIELD

The present invention relates to a memory card socket for holding a card-like compact storage media (hereinafter, memory card) which has an IC card function for sending and receiving data to and from outside by means of non-contact communication such that the memory card can be inserted into and removed from the memory card socket.

### BACKGROUND ART

Conventionally, as data storing means in an electronic equipment such as a digital camera and a cellular phone, a memory card (e.g., a SD memory card (trademark) and a multimedia card (trademark)) having a nonvolatile memory such as a flash memory in a card-like housing have become widespread.

As a memory card socket into and from which the memory card is inserted and removed, there is a known memory card socket having a case formed with a card receiving portion for receiving a thin plate-like memory card, and a slider which is held in the card receiving portion such that the slider can move forward and backward in the inserting/pulling-out direction of the memory card in association with the memory card inserted into the card receiving portion, and the memory card inserted into the card receiving portion is held in the deep side in the card receiving portion (see, for example, Japanese Patent Application Laid-open No. 2005-26016, Japanese Patent Application Laid-open No. 2002-279377).

Such a memory card socket has a so-called push on/push off type lock mechanism in which if the memory card is pushed into the deep side in the card receiving portion, the memory card is locked, and if the memory card is again pushed to the deep side, the memory card is unlocked, The slider is biased toward a card insertion opening by biasing means such as a coil spring in the card receiving portion.

That is, when the memory card is to be attached, if the memory card is pushed to the deepest side in the card receiving portion and the pushing force against the memory card is released, the slider which holds the memory card is pushed by the biasing force of the biasing means and is locked at a position which is slightly returned toward the card insertion opening (lock position).

On the other hand, when the memory card is to be detached, if the memory card is pushed slightly deeper than the lock position and the pushing force against the memory card is released, the locked state of the slider by the locking mechanism is released, the slider is pushed out by the biasing force of the biasing means, and the memory card is exposed out from the card insertion opening,

It is expected that a memory card having an IC card function for sending and receiving data to and from outside by means of non-contact communication will become widespread. An antenna for the non-contact communication is contained in the memory card having the IC card function, but since the memory card itself is small, the contained antenna is also small inevitably, and it is an important object to secure a communication distance. A patent document 2 discloses a technique for securing the communication distance by attaching the memory card having the IC card function to a credit card type adapter containing an antenna.

When the conventional credit card type adapter described in Japanese Patent Application Laid-open No. 2002-279377 is used, however, there is a problem that the adapter cannot be attached to the conventional memory card socket, it is necessary to again design a special socket, the socket is increased in size and the producing cost is largely increased.

Hence, it is an object of the present invention to provide a memory card socket having a compact and simple structure and the non-contact communication capable of suppressing the increase in the production cost.

### DISCLOSURE OF INVENTION

According to the present invention, there is provided a memory card socket comprising a case formed with a card receiving portion for receiving a thin plate-like memory card having a coil-like antenna, and a slider which is held in the card receiving portion such that the slider can move forward and backward in an inserting/pulling-out direction of the memory card in association with a memory card inserted into the card receiving portion, in which the memory card pushed into the card receiving portion is held on a deep side in the card receiving portion through the slider, wherein the memory card socket further comprises a plate-like antenna block having a coil-like secondary antenna which is opposed to the antenna, and a cavity is formed in a portion of the antenna block inside of a coil of the secondary antenna

Further, according to the present invention, there is provided a memory card socket comprising a case formed with a card receiving portion for receiving a thin plate-like memory card having a coil-like antenna, and a slider which is held in the card receiving portion such that the slider can move forward and backward in an inserting/pulling-out direction of the memory card in association with a memory card inserted into the card receiving portion, in which the memory card pushed into the card receiving portion is held on a deep side in the card receiving portion through the slider, wherein the memory card socket further comprises a plate-like antenna block having a coil-like secondary antenna which is opposed to the antenna, and a magnetic sheet is provided inside of a coil of the secondary antenna of the antenna block,

Further, according to the present invention, there is provided a memory card socket comprising a case formed with a card receiving portion for receiving a thin plate-like memory card having a coil-like antenna, and a slider which is held in the card receiving portion such that the slider can move forward and backward in an inserting/pulling-out direction of the memory card in association with a memory card inserted into the card receiving portion, in which the memory card pushed into the card receiving portion is held on a deep side in the card receiving portion through the slider, wherein the memory card socket further comprises a plate-like antenna block having a coil-like secondary antenna which is opposed to the antenna, and the antenna block is provided with a magnetic sheet located between the secondary antenna and the antenna of the memory card.

Further, according to the present invention, it is preferable to provide the magnetic sheet such as to cover an entire region of an inner side from at least an outer peripheral edge of the secondary antenna.

Further, according to the present invention, it is preferable to provide the magnetic sheet which is a band-like sheet extending along a coil of the secondary antenna.

Further, according to the present invention, it is preferable to provide the antenna block which can move forward and backward in an inserting/pulling-out direction of the memory card.

### BRIEF DESCRIPTION OF THE DRAWINGS

Fig. 1 is a perspective view of a memory card socket and a memory card according to a first embodiment of the present invention.
Fig. 2 is a perspective view of a socket block included in the memory card socket according to the embodiment of the invention.
Fig. 3 is an exploded perspective view of an antenna block included in the memory card socket according to the first embodiment of the invention.
Figs. 4 show a guide member for movably guiding the antenna block included in the memory card socket according to the embodiment of the invention, where (a) is a sectional view taken along a line IVa-IVa in Fig.1, and (b) is a sectional view taken along a line IVb-IVb in (a).
Fig. 5 is a sectional view taken along a line V-V in Fig. 1.
Figs. 6 show a leaf spring used in the memory card socket according to the embodiment of the invention, where (a) is a plan view and (b) is a side view.
Figs. 7 show an operation of an antenna block in the memory card socket according to the first embodiment of the invention, where (a) is a perspective view of a state where the memory card is in an attached position and (b) is a perspective view of a state where the memory card is pushed to the deep side.
Fig. 8 is a perspective view of a memory card socket according to a second embodiment of the invention.
Fig. 9 is a sectional view taken along a line IX-IX in Fig. 8.
Fig. 10 is a perspective view of a memory card socket according to a third embodiment of the present invention.
Fig. 11 is an exploded perspective view of the memory card socket according to the third embodiment of the invention.
Fig. 12 is a sectional view taken along a line XII-XII in Fig. 10.
Fig. 13 is a perspective view of a memory card socket according to a fourth embodiment of the present invention.
Fig. 14 is an exploded perspective view of an antenna block included in the memory card socket according to the fourth embodiment of the invention.

### BEST MODE FOR CARRYING OUT THE INVENTION

### (First Embodiment)

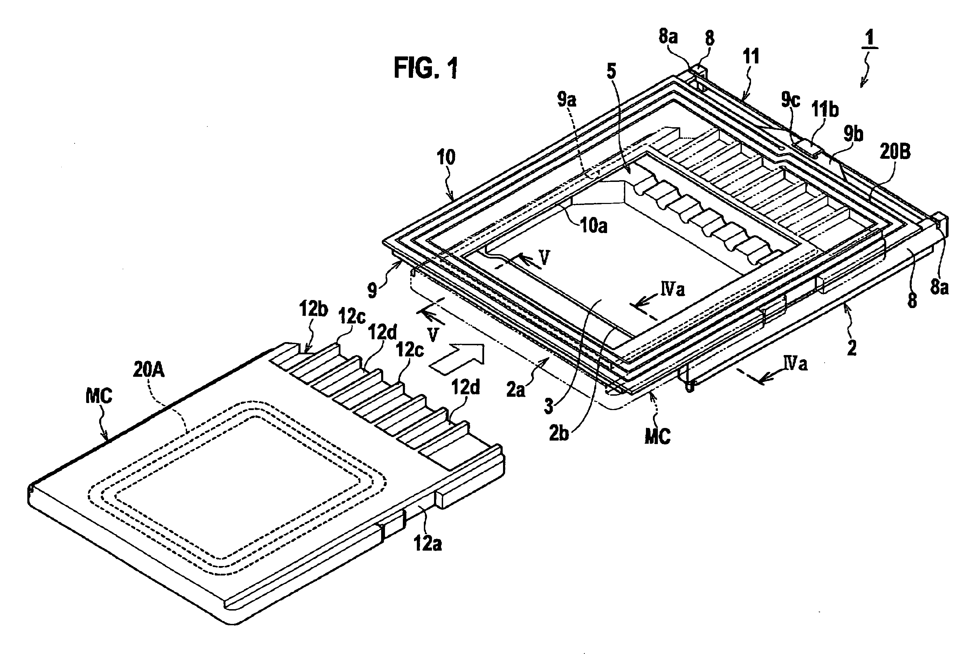

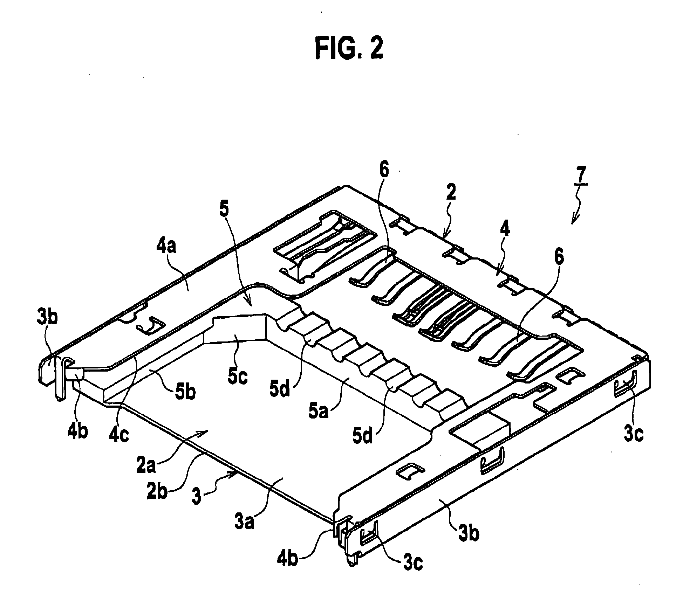

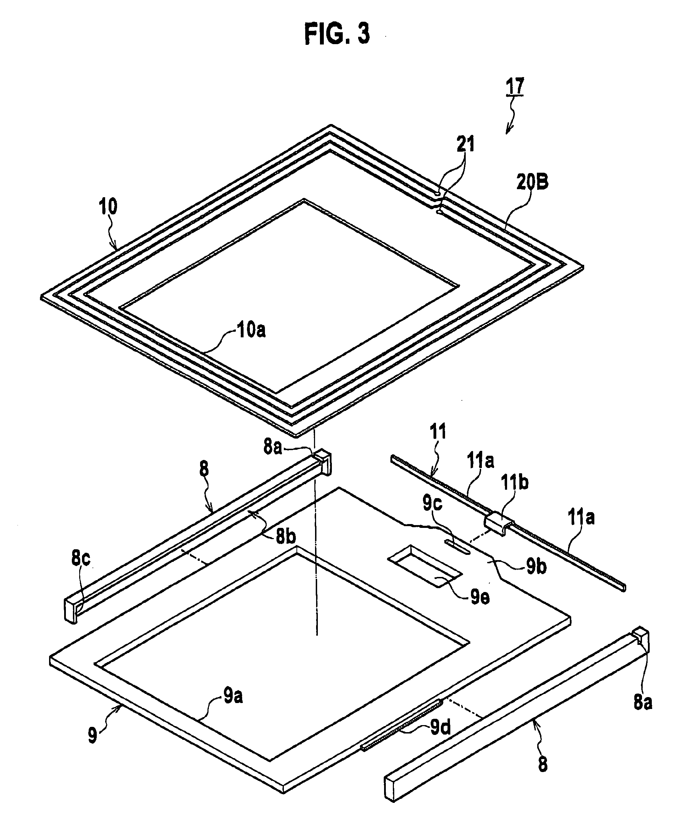

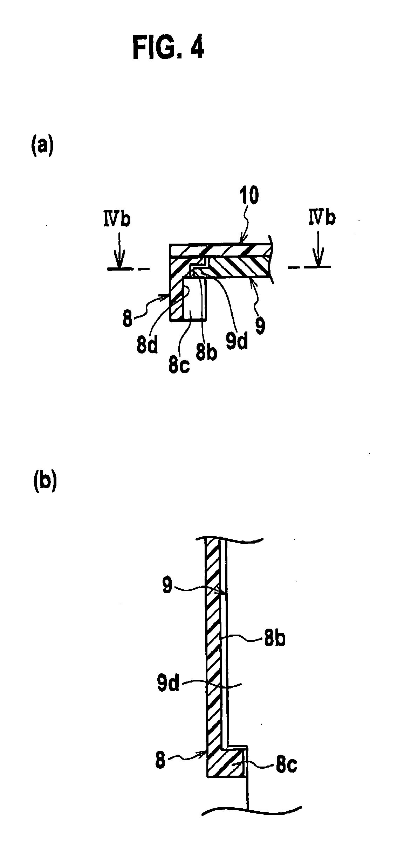

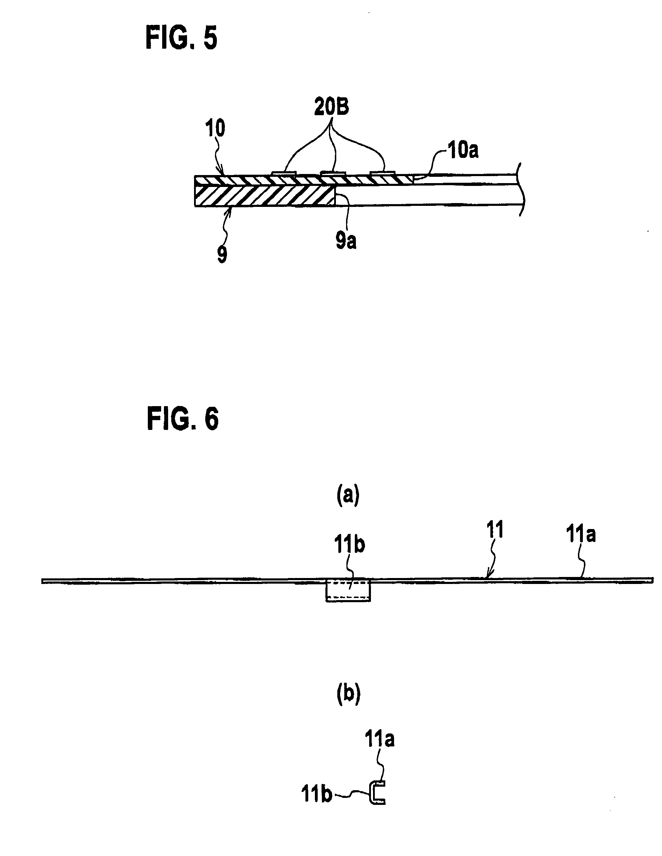

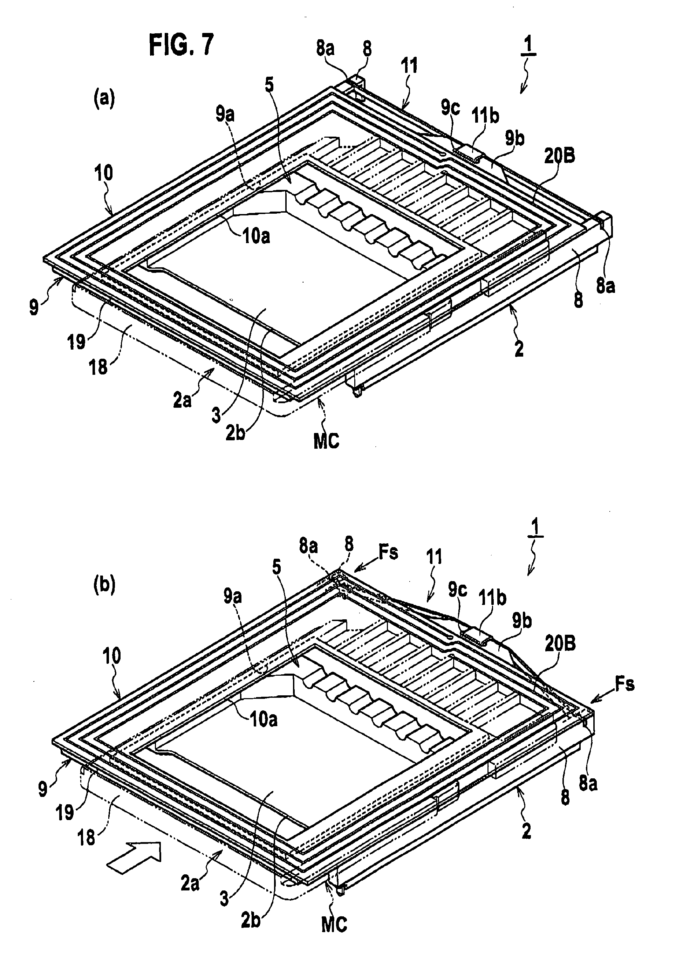

Fig. 1 is a perspective view of a memory card socket and a memory card according to a first embodiment of the present invention. Fig. 2 is a perspective view of a socket block included in the memory card socket according to the embodiment of the invention. Fig. 3 is an exploded perspective view of an antenna block included in the memory card socket according to the first embodiment of the invention. Figs. 4 show a guide member for movably guiding the antenna block included in the memory card socket according to the embodiment of the invention, where (a) is a sectional view taken along a line IVa-IVa in Fig. 1, and (b) is a sectional view taken along a line IVb-IVb in (a). Fig. 5 is a sectional view taken along a line V-V in Fig. 1. Figs. 6 show a leaf spring used in the memory card socket according to the embodiment of the invention, where (a) is a plan view and (b) is a side view. Figs. 7 show an operation of an antenna block in the memory card socket according to the first embodiment of the invention, where (a) is a perspective view of a state where the memory card is in an attached position and (b) is a perspective view of a state where the memory card is pushed to the deep side.

For the sake of explanation, a front surface of a memory card MC on which electrodes 12d are formed is called an upper side, and a back surface of the memory card MC is called a lower side in the following explanation.

The memory card socket 1 according to the embodiment is mounted on an electronic equipment (not shown), and functions as a socket into and from which the memory card MC is inserted and removed. In the inserted state, a plurality of electrodes 12d formed on a front surface or a back surface of the memory card MC through a dividing wall 12c and contact terminals 6 formed on the memory card socket 1 come into contact with each other for conduction, and data can be sent and received between the electronic equipment and the memory card MC.

The memory card socket 1 has a structure for realizing non-contact communication with an outside reader/writer. The memory card socket 1 has a socket block 7 for holding the memory card MC, and an antenna block 17 which is disposed on the socket block 7 and which is formed with a secondary antenna 20B for carrying out the non-contact communication.

First, the socket block 7 will be explained.

The socket block 7 has a structure and a function which are almost the same as those of the conventional memory card socket which does not have the non-contact communication function. The socket block 7 has a so-called push on/push off function in which the memory card MC is locked at a predetermined attached position by inserting the memory card MC into a card receiving portion 2a from the card insertion opening 2b, and the locked state of the memory card MC is released by again pushing the memory card MC, and the memory card MC jumps out from the card insertion opening 2b of the card receiving portion 2a.

As shown in Figs. 1 and 2, the socket block 7 basically includes a flat and substantially rectangular tube-like case 2 formed at its one side surface (front surface on the front side in the inserting direction) with a thin and long band-like card insertion opening 2b, a slider 5 which is supported in the card receiving portion 2a of the case 2 such that the slider 5 can move forward and backward between a side of the card insertion opening 2b and a deep side, a coil spring (not shown) as a biasing mechanism which biases the slider 5 toward the card insertion opening 2b in the card receiving portion 2a, and a contact block (not shown) provided on the deep side of the card receiving portion 2a of the case 2.

The case 2 includes a base shell 4 and a cover shell 3 which are coupled to each other. The base shell 4 and the cover shell 3 are made of metal thin plates having excellent conductivity and thermal conductivity such as stainless steel and are formed into appropriate shapes.

The base shell 4 has a base bottom wall 4a. The base bottom wall 4a has a pair of mutually opposed ends, the ends are bent substantially at right angles, and the base bottom wall 4a has a band-like standing sidewall (not shown) having a substantially constant height. The base bottom wall 4a or a sidewall (in this embodiment, base bottom wall 4a) is cut and lifted at an angle portion of the card insertion opening 2b, thereby forming stoppers 4b which prevent the slider 5 from falling out from the card insertion opening 2b.

The base bottom wall 4a is formed with a opening 4c which is formed by largely notching the card insertion opening 2b to its deep side so that the base bottom wall 4a (base shell 4) made of conductive material is not interposed between the antenna (loop coil) 20A incorporated in the memory card MC and a secondary antenna 20B (loop coil; flat coil) B provided on the antenna block 17 in a state where the memory card MC is mounted,

The cover shell 3 has a base bottom wall 3a having a pair of mutually opposed parallel ends. The ends are bent substantially at right angles to form band-like sidewalls 3b having a substantially constant height.

Recesses of the base shell 4 and the cover shell 3 are opposed to each other, the sidewalls thereof are superposed on each other and they are coupled into a substantially rectangular tube-like shape, one of openings of the rectangular tube-like shape is closed with a rod-like contact block (not shown) made of insulative resin, and the bottomed flat rectangular tube-like card receiving portion 2a is formed in the case 2. The memory card MC is accommodated in this card receiving portion 2a.

In this embodiment, the outer sidewall 3b of the cover shell 3 among the mutually superposed sidewalls is formed with a pawl 3c formed by punching the sidewall 3b into an appropriate shape. The pawl 3c is inwardly bent and engaged with the sidewall of the base shell 4 so that the base shell 4 and the cover shell 3 are coupled to each other.

The slider 5 is loosely inserted into the card receiving portion 2a such that the slider 5 can move forward and backward between the card insertion opening 2b and the deep side. The slider 5 includes a deep wall 5a, a pair of sidewalls 5b and an angle wall 5c. The slider 5 is formed into a substantially U-shape as viewed from above. A deep side end of the memory card MC inserted into the card receiving portion 2a in a predetermined attitude collides against the pair of sidewalls 5b and an inner wall of the angle wall 5c. Each of the sidewalls 5b of the slider 5 is formed with a projection (not shown) which is inserted into a notch 12a formed in a side edge of the memory card MC. The memory card MC is held by the slider 5 by engaging the projection and the notch 12a with each other. Therefore, if the memory card MC is inserted into the card receiving portion 2a in the predetermined attitude, the memory card MC is held by the slider 5 and in this held state, the memory card MC can move forward and backward in the card receiving portion 2a. A recess 5d is formed in an upper surface of the deep wall 5a on the side of the base shell 4 for avoiding interference with respect to the contact terminal 6 when the slider 5 is located on the deep side in the card receiving portion 2a.

The position of the slider 5 in the card receiving portion 2a is controlled by a known push on/push off mechanism including a heart cam mechanism (not shown) and biasing means (not shown) such as a coil spring which biases the slider 5 toward the card insertion opening 2b. For example, one end of a pin (not shown) extending along the inserting direction (forward and backward direction) of the memory card MC is rotatably provided on a contact block (not shown) provided on the deepest portion of the card receiving portion 2a, a bottom surface of a groove (not shown) formed on one of the sidewalls 5b of the slider 5 is provided with an appropriate step, the other end of the pin which is bent toward the bottom surface is allowed to abut against a sidewall of the groove by a biasing force of the coil spring or a pushing force of the memory card MC, the other end is pushed and abutted against the bottom wall of the groove by a spring structure (not shown) provided on the cover shell 3, thereby forming a passage for guiding the end of the pin on the side of the card insertion opening 2b in a determined normal direction without reversely moving at least in a certain section. A portion of the groove on the side of the card insertion opening 2b is formed into a substantially heart shape as viewed from above, a so-called heart cam mechanism is formed, and a push on/push off mechanism of the memory card MC can be realized.

The contact terminal 6 is fixed to the contact block which is provided on the deep side in the card receiving portion 2a and made of resin. The contact terminal 6 extends in the card receiving portion 2a toward the card insertion opening 2b from the deep side. The contact terminal 6 penetrates the contact block, an end of the contact terminal 6 on the side of the card insertion opening 2b comes into contact with the electrode 12d of the memory card MC, and the other end of the contact terminal 6 is soldered to a circuit substrate provided on the electronic equipment The contact terminal 6 can be fixed to the contact block by insert forming, or can be fitted into and fixed to a small hole provided on the contact block.

Next, the antenna block 17 will be explained.

As shown in Fig. 3, the antenna block 17 includes an antenna substrate 10 formed with a secondary antenna (loop coil) 2B, a base plate 9 as a supporting stage of the antenna substrate 10, a guide member 8 which guides the base plate 9 (and the antenna substrate 10) along the insertion direction of the memory card MC such that the base plate 9 can move forward and backward, and a leaf spring 11 as biasing means which is held by the guide member 8 and which biases the base plate 9 (and the antenna substrate 10) toward the card insertion opening 2b.

The guide member 8 is made of resin and formed into a rod shape. The guide member 8 is disposed such as to cover an angle portion between the sidewall 3b of the cover shell 3 and the base bottom wall 4a of the base shell 4 along this angle portion. The guide member 8 is fixed to the socket block 7 by an adhesive.

As shown in Figs. 3 and 4, the guide member 8 is formed with step-like grooves 8b and 8d which open inward and downward and which extend in the longitudinal direction A corner of the lower groove 8d abuts against an outer side and tip end side (upper side) angle portion of the sidewall 3b of the cover shell 3, the length of the groove 8d is almost the same or slightly longer than the length of the sidewall 3b. The groove 8d functions as positioning means of the guide member 8 and the antenna block 17 with respect to the socket block 7. An end wall 8c of the groove 8d on the side of the card insertion opening 2b in the longitudinal direction (left lower side in the drawing) also functions as movement-restricting means for restricting movements of the base plate 9 and the antenna substrate 10 toward the card insertion opening 2b.

Meanwhile, a projection 9d projecting from a sidewall of the base plate 9 is loosely inserted into the upper groove 8b such that the projection 9d can move in the longitudinal direction of the upper groove 8b. In this embodiment, the groove 8b and the projection 9d function as guide mechanisms for guiding the base plate 9 and the antenna substrate 10 with respect to the guide member 8 such that they can move forward and backward along the inserting direction of the memory card MC.

The base plate 9 is, for example, made of resin and formed into a substantially rectangular flat plate-like shape made of resin, and the base plate 9 is sandwiched between the pair of guide members 8 and 8. A rectangular opening 9a is formed in a central portion of the base plate 9. The base plate 9 is formed with a projection 9b having an end edge on the deep side of the card receiving portion 2a. The end edge of the projection 9b projects into a substantially mountain shape, and the projection 9b is provided with a slit 9c into which the leaf spring 11 is fitted.

The antenna substrate 10 is, for example, made of resin and formed into a substantially rectangular flat plate-like shape, and the antenna substrate 10 is provided between upper surfaces of the pair of guide members 8 and 8. The antenna substrate 10 is not fixed to the guide members 8 and 8, and is fixed to the base plate 9 by means of an adhesive. The antenna substrate 10 moves forward and backward together with the base plate 9 relative to the guide members 8 and 8. In a state where the antenna block 17 is attached to the socket block 7, the antenna substrate 10 can move forward and backward in the inserting direction (forward and backward direction) of the memory card MC in the card receiving portion 2a.

The antenna substrate 10 is formed at its central portion with a rectangular opening 10a. As shown in Fig. 5 also, the coil-like secondary antenna 20B is wound around the opening 10a several times (three times in this embodiment) in a rectangular form. In this embodiment, the openings 9a and 10a correspond to cavities in the present invention. In this embodiment, the secondary antenna 20B is formed as a conductive pattern on the surface of the antenna substrate 10, but the secondary antenna 20B can be formed using other methods. For example, the secondary antenna 20B can be insert-formed in the antenna substrate 10.

The secondary antenna 20B is provided such as to be opposed to the antenna 20A of the memory card MC when the memory card MC is in a position (attached position) where the memory card MC is held on the deep side in the card receiving portion 2a. That is, according to the memory card socket 1 of the embodiment, when the memory card MC is attached to the memory card socket 1, the antenna 20A and the secondary antenna 20B are superposed on each other as viewed from above or one of the antenna 20A and the secondary antenna 20B is disposed on the other coil and coils of both the antennas extend along each other.

As shown in Fig. 3, it is preferable that both ends of a loop coil of the secondary antenna 20B are connected to an electronic equipment (e.g., chip capacitor (not shown)) disposed on a lower surface of the antenna substrate 10 through a through hole 21, frequency characteristics, especially high frequency characteristics of the secondary antenna 20B can appropriately be adjusted by the electronic equipment. In this case, it is preferable that the base plate 9 is provided with a recess 9e, and the electronic equipment is accommodated in a space surrounded by the recess 9e and the antenna substrate 10.

As shown in Fig. 6, the leaf spring 11 is provided with a U-shaped pawl 11b at a central portion of a band 11 a. The band 11 a is thin and long. As shown in Fig. 3, the pawl 11b is fitted into the slit 9c formed in the projection 9b of the base plate 9. Both ends of the band 11a are loosely inserted into notches 8a formed in ends of the guide members 8 and 8 on the deep side in the longitudinal direction (right upper side in the drawing).

As shown in Figs. 7, a movable portion of the antenna block 17 having the base plate 9 and the antenna substrate 10 is biased toward the card insertion opening 2b in the inserting direction of the memory card MC by the leaf spring 11.

Fig. 7(a) shows an initial state of the movable portion (base plate 9 and antenna substrate 10). In this state, the leaf spring 11 is substantially straightly extended. Here, if the movable portion is pushed into the deep side (right side in the drawing) in the inserting direction of the memory card MC, the leaf spring 11 pushed by the base plate 9 is bent in a mountain form, and a biasing force Fs acting toward the card insertion opening 2b in the inserting direction of the memory card MC is generated by a resilient force of the mountain shape of the leaf spring 11. If this pushing force is released in this state, the movable portion is pushed toward the card insertion opening 2b by the leaf spring 11, and the movable portion is returned to the state shown in Fig, 7(a). In the state shown in Fig. 7(a), the leaf spring 11 is brought into a free state where no set load is applied. In this state, the projection 9d of the base plate 9 collides against the end wall 8c of the guide member 8 so that the movable portion does not move frontward (left lower side in the drawing) in the inserting direction of the memory card MC from the state shown in Fig. 7(a).

In this embodiment, a frontward end edge (end surface) 18 in the inserting direction of the memory card MC and a frontward end edge (end surface) 19 of the movable portion range at substantially the same position in a state where the memory card MC is attached to a deep side predetermined position (lock position) of the card receiving portion 2a as shown in Figs. 7, and, for example, if the memory card MC is pushed into the end edge 18 by a finger of a user when the memory card MC is to be detached, the end edge 19 of the movable portion is pushed together, and the memory card MC and the movable portion are moved in association with each other.

The antenna block 17 having the above-described structure is preferably adhered and fixed to the socket block 7 in an integrally and temporarily assembled state.

According to the embodiment, if the memory card MC is inserted into the card receiving portion 2a from the card insertion opening 2b and pushed to the deep side, the memory card MC is once pushed to the deepest portion of the card receiving portion 2a by the push on/push off mechanism utilizing the heart cam mechanism, and the memory card MC is locked at a position slightly returning toward the card insertion opening 2b.

As described above, according to the embodiment, when the memory card MC is at the position where the memory card MC is held on the deep side in the card receiving portion 2a, since the antenna 20A and the secondary antenna 20B are opposed to each other, the communication distance of the memory card MC can be increased.

Further, in this embodiment, the cavities are formed on the inner side of the coil of the secondary antenna 20B by the openings 9a and 10a. Therefore, as compared with a case where resin or metal exists inside of the coil, dielectric constant inside of the coil can be lowered, a loss caused by electromagnetic induction electromotive force generated by magnetic field of the outside reader/writer can be reduced, induction electric power of the secondary antenna 20B and the antenna 20A incorporated in the memory card MC can be increased, and the communication distance can be increased.

According to this embodiment, the memory card MC and the movable portion of the antenna block 17 move in association with each other at least on the deeper side of the memory card MC than the attached position, and the relative positional relation between the antenna 20A and the secondary antenna 20B can be uniquely determined. Therefore, there is a merit that the reliability of the non-contact communication can be enhanced.

When the push on/push off mechanism utilizing the heart cam mechanism is employed as in this embodiment, it is necessary to push the memory card MC deeper than the attached position when the memory card MC is to be attached and when it is to be detached, but if the antenna block is fixed at that time, it becomes necessary to push only the memory card MC, and this is troublesome. In the case of this embodiment, since the antenna block 17 can be moved to the deep side at least in a section up to the deepest position than the attached position, there is a merit that the antenna block 17 does not become an obstruction when pushing the memory card MC, and the operability is enhanced.

Particularly in this embodiment, the position of the end edge (end surface) 19 of the frontward side in the inserting direction of the movable portion of the antenna block 17 and the position of the end edge (end surface) 18 of the frontward side in the inserting direction when the memory card MC is in the attached position are substantially aligned with each other in the inserting direction of the memory card MC and both of them can be pushed manually in parallel. With this, there is effect that it is unnecessary to mechanically connect the slider 5 and the movable portion of the antenna block 17 with each other, and a structure for enlarging a region where the memory card MC and the movable portion of the antenna block 17 are opposed to each other and for enhancing the communication reliability can be realized more simply, the number of parts can be reduced, the operability can be enhanced and the producing cost can be reduced.

The antenna substrate 10 can be widened to a position of the end edge 18 of the frontward side in the inserting direction of the memory card MC. Therefore, there is a merit that the layout flexibility of the secondary antenna 20B is enhanced, the performance is enhanced and the producing cost can be cut down.

In addition, the movable portion of the antenna block 17 is restricted from moving frontward from the position corresponding to the attached position of the memory card MC, and when the memory card MC is to be removed, the slider 5 biased by the biasing means moves toward the card insertion opening 2b of the card receiving portion 2a, and the memory card MC projects frontward from the movable portion. According to this embodiment, there is a merit that the memory card MC can be easily taken out.

### (Second Embodiment)

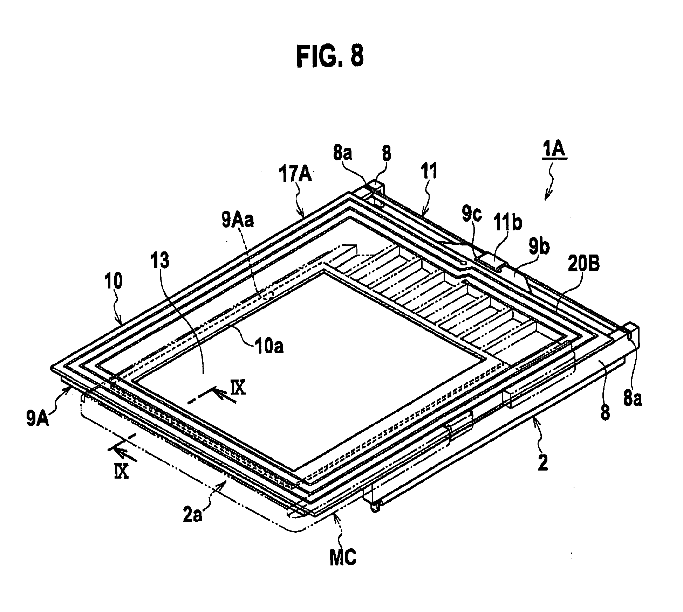

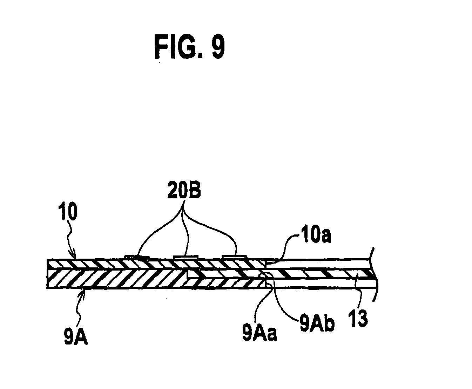

Fig. 8 is a perspective view of a memory card socket according to a second embodiment. Fig. 9 is a sectional view taken along a line IX-IX in Fig. 8. A memory card socket 1A according to the second embodiment has the same constituent elements as those of the memory card socket 1 according to the first embodiment. Like constituent elements are designated with like reference symbols, and redundant explanations will be omitted.

The memory card socket 1A according to the second embodiment is different from the memory card socket 1 according to the first embodiment in that a magnetic sheet 13 is provided inside of the coil of the secondary antenna 20B of an antenna block 17A instead of forming the cavity, and other structure is quite the same as that of the first embodiment.

That is, in this embodiment, a recess 9Ab (Fig. 9) is formed in a peripheral edge of a rectangular opening 9Aa of a base plate 9A, a peripheral edge of the rectangular magnetic sheet 13 is placed on the recess 9Ab, the magnetic sheet 13 is sandwiched between the base plate 9A and the antenna substrate 10, and the opening 9a of the antenna substrate 10 and the opening 9Aa of the base plate 9A are closed with the magnetic sheet 13.

The magnetic sheet 13 is a composite magnetic sheet including non-conductive binder which is made of rubber or resin and which has magnetic permeability, and magnetic powder or flake such as ferrite. It is preferable that the magnetic sheet 13 has relatively high magnetic permeability (e.g., 230 to 300) and the magnetic sheet 13 has substantially no electric conductivity.

According to this embodiment, the relative permeability inside of the coil can be increased by the magnetic sheet 13 provided inside of the coil of the secondary antenna 20B as compared with a case where resin or metal exists inside of the coil. Therefore, magnetic lines of force of the external reader/writer can be pulled into the inside of the coil, the induction electric power of the secondary antenna 20B can be increased, and the communication distance of the memory card MC can be increased.

According to the second embodiment, almost the same effect as that obtained by the first embodiment can be obtained.

### (Third Embodiment)

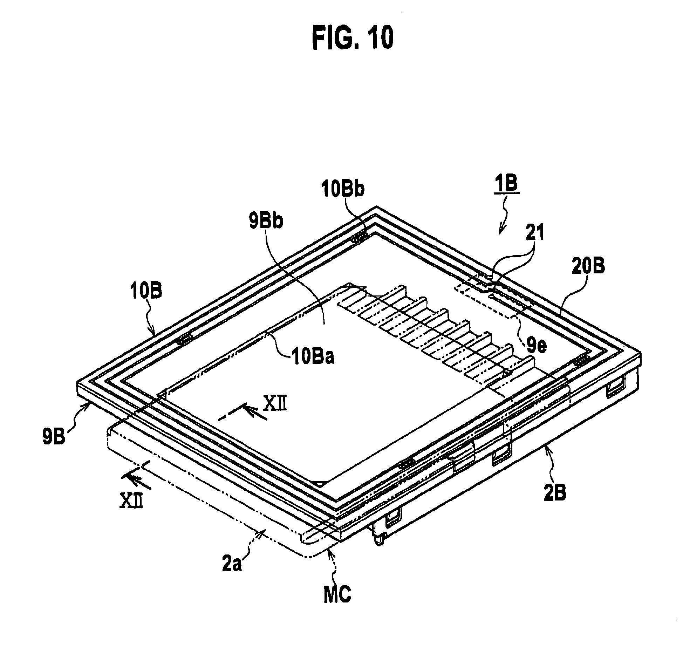

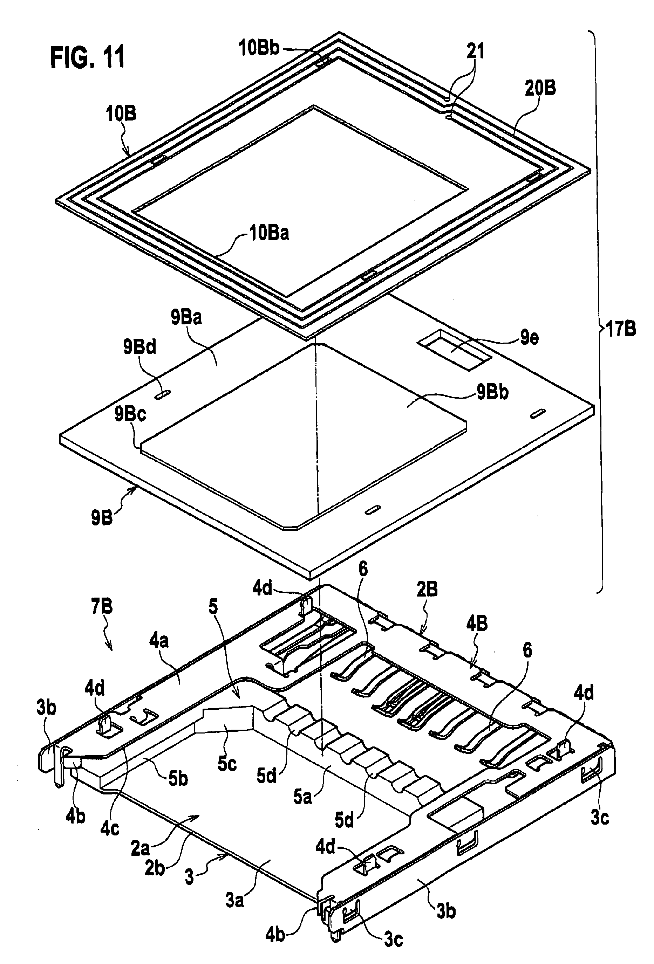

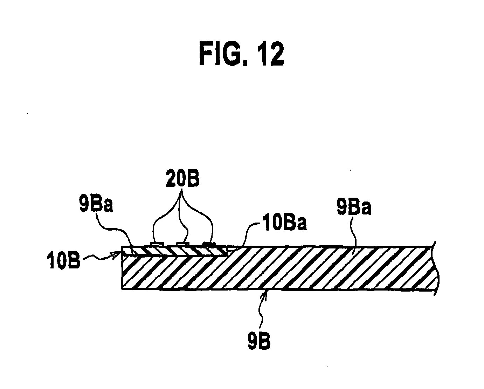

Fig. 10 is a perspective view of the memory card socket of a third embodiment. Fig. 11 is an exploded perspective view of the memory card socket according to this embodiment. Fig. 12 is a sectional view taken along a line XII-XII in Fig. 10. The memory card socket 1B according to the third embodiment has like constituent elements as those of the memory card socket 1 according to the first embodiment. Like constituent elements are designated with like reference symbols, and redundant explanations will be omitted,

The memory card socket 1B according to the embodiment is different from that of the first embodiment in that an antenna block 17B (Fig. 11) is fixed to a socket block 7B.

That is, as shown in Fig. 11, in the socket block 7B, a base bottom wall 4a of the base shell 4 is cut and lifted to form latching pawls 4d, the latching pawls 4d are inserted into latching holes 10Bb and 9Bd formed in an antenna substrate 10B and a base plate 9B of the antenna block 17B, and the latching pawls 4d latch the antenna block 17B.

As shown in Fig. 12 also, in this embodiment, a rectangular projection 9Bb as viewed from above is provided on a substantially central portion of the base plate 9B (base bottom wall 9Ba thereof), The projection 9Bb is fitted into a substantially rectangular opening 10Ba as viewed from above formed in a central portion of the antenna substrate 10B, and the base plate 9B itself is formed as a magnetic sheet. An angle portion of the projection 9Bb is provided with a chamfered portion 9Bc so that the projection 9Bb can easily be attached to the opening 10Ba. According to this structure, a state where the base plate 9B as the magnetic sheet is interposed between the secondary antenna 20B and the antenna 20A of the memory card MC can be obtained.

In this embodiment also, when the memory card MC is in the attached position, the antenna substrate 10B is formed with the secondary antenna 20B at a position opposed to the antenna 20A incorporated in the memory card MC.

According to this embodiment, the antenna block 17B is fixed to the socket block 7B. Therefore, there is effect that the memory card socket 1B can be realized as a simpler structure, the number of parts can be reduced, the operability can be enhanced and the producing cost can be cut down.

According to this embodiment, in addition to the effect obtained by providing the secondary antenna 20B opposed to the antenna 20A of the memory card MC, since the antenna block 17B is provided with the base plate 9B as the magnetic sheet such that the base plate 9B is located between the secondary antenna 20B and the antenna 20A of the memory card MC, the magnetic lines of force of the external reader/writer are pulled in, the induction electric power of the secondary antenna 20B can be increased, and the communication distance can be increased.

In this embodiment, the base plate 9B as the magnetic sheet is provided such as to cover the entire region on the inner side at least from the outer peripheral edge of the secondary antenna 20B. Therefore, the magnetic lines of force of the outside reader/writer are pulled inside of the coil of the secondary antenna 20B and onto the secondary antenna 20B, the induction electric power of the secondary antenna 20B can be increased and the communication distance can further be increased.

In this embodiment, since the base plate 9B itself is formed as the magnetic sheet, the memory card socket 1B can be realized as a simpler structure as compared with a case where a magnetic sheet is provided independently from the base plate 9B, the number of parts can be cut down, the operability can be enhanced, and the producing cost can be cut down.

### (Fourth Embodiment)

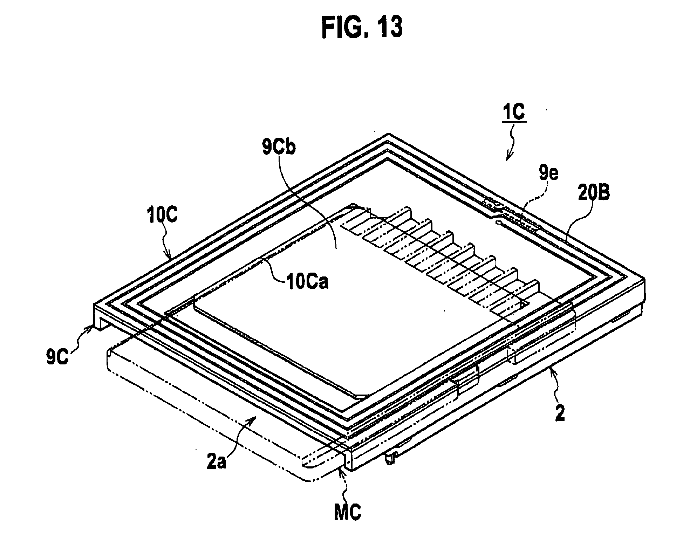

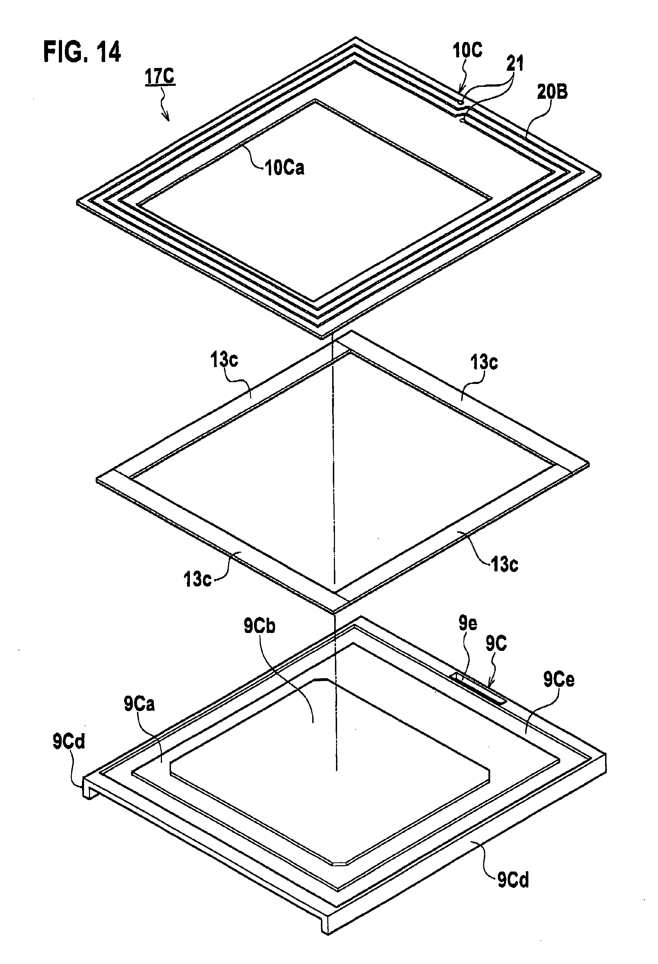

Fig. 13 is a perspective view of a memory card socket according to a fourth embodiment. Fig. 14 is an exploded perspective view of an antenna block of the memory card socket according to the third embodiment The memory card socket 1C according to the fourth embodiment has like constituent elements as those of the memory card socket 1 according to the first embodiment. Like constituent elements are designated with like reference symbols, and redundant explanations will be omitted.

The memory card socket 1C according to the fourth embodiment is different from that of the first embodiment in that the antenna block 17C (Fig. 14) is fixed to the socket block 7 (Fig. 2). The memory card socket 1C according to the fourth embodiment is also different from the memory card socket 1B according to the third embodiment

Substantially U-shaped base plate 9C having sidewalls 9Cd as viewed from the inserting direction of the memory card MC is provided on the socket block 7 (Fig. 2) that is the same as that used in the memory card socket 1 according to the first embodiment The sidewalls 9Cd projects downward along both outer side edges of the socket block 7. A magnetic sheet 13C is inserted into a rectangular shallow annular groove 9Ce formed in the base plate 9C. The magnetic sheet 13C is sandwiched between the base plate 9C and the antenna substrate 10C.

More specifically, the base plate 9C is made of, for example, resin. The base plate 9C has a rectangular plate-like base bottom wall 9Ca as viewed from above, a projection 9Cb projecting substantially in a rectangular shape at a central portion of the base bottom wall 9Ca as viewed from above, and the sidewalls 9Cd projecting downward from a pair of end sides of the base bottom wall 9Ca at the constant height. The rectangular annular groove 9Ce is formed on the surface (upper surface) of the base bottom wall 9Ca such as to surround the projection 9Cb with the constant width. The projection 9Cb is fitted into a rectangular opening 10Ca formed in a central portion of the antenna substrate 10C.

A distance between the pair of sidewalls 9Cd is almost the same or slightly longer than a distance of an outer surface of a sidewall of the socket block 7 so that the base plate 9C can be fitted over the socket block 7.

Each of the magnetic sheets 13C is formed into a band-like shape having the constant width, and four magnetic sheets 13C are disposed along each side of the rectangular annular groove 9Ce one each. Four sides of the rectangular annular groove 9Ce have the same widths. With this, the band-like magnetic sheet can be cut appropriately and the producing cost can be cut down.

The band-like magnetic sheet 13C is located below the secondary antenna 20B along the secondary antenna 20B formed on the antenna substrate 10C.

Also in this embodiment, it is preferable that the antenna block 17C can be adhered and fixed to the socket block 7 in an integrally and temporarily assembled state. The base plate 9C and the antenna substrate 10C are adhered and fixed to each other. Further, the antenna block 17C is adhered and fixed to the socket block 7C.

According to this embodiment also, since the antenna block 17C is fixed to the socket block 7, the same effect as that of the third embodiment can be obtained.

According to this embodiment also, like the third embodiment, in addition to the effect obtained by providing the secondary antenna 20B which is opposed to the antenna 20A of the memory card MC, since the antenna block 17C is provided with the magnetic sheet 13C located between the secondary antenna 20B and the antenna 20A of the memory card MC, the magnetic lines of force of the external reader/writer are pulled in, the induction electric power of the secondary antenna 20B can be increased, and the communication distance can be increased.

In this embodiment, since the magnetic sheet 13C is the band-like sheet extending along the coil of the secondary antenna 20B, the magnetic lines of force of the external reader/writer are pulled in the inner side of the secondary antenna 20B or the secondary antenna 20B, the induction electric power of the secondary antenna 20B can be increased, a magnetic electric field caused by the induction electric power of the secondary antenna 20B and a magnetic field directly caused by the external reader/writer are effectively applied, the induction electric power of the antenna 20A incorporated in the memory card MC can be increased, and the communication distance can be largely increased.

Although the magnetic sheets 13C are disposed annularly along the entire periphery of the secondary antenna 20B in this embodiment, it is not always necessary to annularly connect the magnetic sheets 13C to each other. For example, frontward one side in the inserting direction can be notched to form substantially a C-shape, or only a pair of sides can be provided in parallel to each other.

While preferred embodiments have been explained above, the present invention is not limited thereto, and various modifications can be made.

For example, in the first and second embodiments, the movable portion of the antenna block and the slider of the memory card MC move independently from each other, but they can be connected and moved together. In such a case, the slider is provided with a projection which penetrates a hole or a notch formed in the case (e.g., base shell), and the projection is fitted into a latching hole formed in the movable portion (e.g., base plate) of the antenna block. In the case of this example, there is a merit that a section where the antenna incorporated in the memory card and the secondary antenna provided on the memory card socket becomes long, and the communication reliability is further enhanced correspondingly.

It is also possible to constitute a different memory card socket by appropriately, combining the constituent elements disclosed in the embodiments.

### INDUSTRIAL APPLICABILITY

According to the memory card socket of the present invention, it is possible to increase the induction electric power of the secondary antenna and the antenna incorporated in the memory card can be increased, and the communication distance can be increased.

## Claims

1. A memory card socket comprising
a case formed with a card receiving portion for receiving a thin plate-like memory card having a coil-like antenna, and
a slider which is held in the card receiving portion such that the slider can move forward and backward in an inserting/pulling-out direction of the memory card in association with a memory card inserted into the card receiving portion, in which
the memory card pushed into the card receiving portion is held on a deep side in the card receiving portion through the slider, wherein
the memory card socket further comprises a plate-like antenna block having a coil-like secondary antenna which is opposed to the antenna, and
a cavity is formed in a portion of the antenna block inside of a coil of the secondary antenna.

2. A memory card socket comprising
a case formed with a card receiving portion for receiving a thin plate-like memory card having a coil-like antenna, and
a slider which is held in the card receiving portion such that the slider can move forward and backward in an inserting/pulling-out direction of the memory card in association with a memory card inserted into the card receiving portion, in which
the memory card pushed into the card receiving portion is held on a deep side in the card receiving portion through the slider, wherein
the memory card socket further comprises a plate-like antenna block having a coil-like secondary antenna which is opposed to the antenna, and
a magnetic sheet is provided inside of a coil of the secondary antenna of the antenna block.

3. A memory card socket comprising
a case formed with a card receiving portion for receiving a thin plate-like memory card having a coil-like antenna, and
a slider which is held in the card receiving portion such that the slider can move forward and backward in an inserting/pulling-out direction of the memory card in association with a memory card inserted into the card receiving portion, in which
the memory card pushed into the card receiving portion is held on a deep side in the card receiving portion through the slider, wherein
the memory card socket further comprises a plate-like antenna block having a coil-like secondary antenna which is opposed to the antenna, and
the antenna block is provided with a magnetic sheet located between the secondary antenna and the antenna of the memory card.

4. The memory card socket according to claim 3, wherein the magnetic sheet is provided such as to cover an entire region of an inner side from at least an outer peripheral edge of the secondary antenna.

5. The memory card socket according to claim 3, wherein the magnetic sheet is a band-like sheet extending along a coil of the secondary antenna,

6. The memory card socket according to any one of claims 1 to 5, wherein the antenna block can move forward and backward in an inserting/pulling-out direction of the memory card.
